# EUROPEAN PATENT APPLICATION

(11) **EP 4 625 743 A1**
(43) Date of publication of application: **01.10.2025**
(21) Application number: 24167288.0
(22) Date of filing: 28.03.2024
(51) Int. Cl.: H02J 3/24, H02J 3/18

(54) **A METHOD FOR SUB-SYNCHRONOUS DAMPING CONTROL WITH STATCOM, A CONTROLLER AND A SYSTEM**

(71) Applicant: Hitachi Energy Ltd, 8050 Zürich (CH)
(72) Inventor: Hasler, Jean-Philippe, 722 44 Västerås (SE); Heydari, Rasool, 722 12 Västerås (SE); Danielsson, Christer, 725 91 Västerås (SE); Zhang, Hongyang, 115 24 Stockholm (SE)
(74) Representative: AWA Sweden AB

(57) **Abstract**

There is disclosed herein a method (100) for sub-synchronous damping control, SSDC, for a STATCOM (20) connected to an alternating current, AC, power grid (2). The method comprises measuring (110) a voltage representative of the voltage of the AC power grid and subjecting (120) the voltage to a low-pass filter and a high-pass filter. The method further comprises cross-coupling (130) an active power order of the voltage with a reactive power decoupler of the voltage to receive a voltage phase angle parameter and cross-coupling a reactive power order of the voltage with an active power decoupler of the voltage to receive a voltage magnitude parameter, and combining (140) the voltage phase angle parameter and the voltage magnitude parameter to provide a voltage reference to the STATCOM. There is also disclosed herein a converter for a STATCOM and a system comprising a STATCOM and said controller.

## Description

### Technical field

The present disclosure relates to a method for sub-synchronous damping control, SSDC, for a STATCOM connected to an alternating current, AC, power grid. The present disclosure further relates to a controller for a STATCOM and to a system comprising said controller.

### Background

The ongoing electrification of various sectors, such as transportation and heating, leads to an increased demand for electricity. As more electric vehicles, electric heating systems, and other electrified technologies become prevalent, the existing power distribution infrastructure may face challenges in meeting the rising demand. By adding capacitors and reactors in series with the transmission lines, series compensation is provided to the transmission lines. Series compensation improves the overall performance and capacity of the power system.

A challenge with series compensation is that it can lead to changes in the system dynamics, making it more susceptible to certain oscillations, such as for example sub-synchronous resonance (SSR) oscillations. The SSR can lead to mechanical vibrations and thereby mechanical stress on components of the power grid. Therefore SSR poses a threat to the power system, especially with the increasing integration of renewable energy sources.

Synchronous generators generally generate sub-synchronous oscillations at a specific frequency. To mitigate or dampen these oscillations power system stabilizers or sub-synchronous damping control (SSDC) combined with Static Synchronous Compensators (STATCOMs) are proposed as methods. The SSDC introduces additional damping into the oscillations, reducing the risk that oscillations grow and cause instability.

However, the increased integration of renewable energy sources replacing traditional generators results in more complex oscillations and resonance frequencies. Further, identifying the specific causes and frequencies of SSR events in diverse power system scenarios are challenging and switching of power lines may alter the resonance frequencies. The complexity results in that the conventional SSDCs are not flexible enough for diverse power system and new control strategies are therefore needed.

### Summary

It is therefore an object of the present disclosure to provide a method for sub-synchronous damping control (SSDC) for a STATCOM connected to an alternating current (AC) power grid that alleviates at least part of the above-mentioned drawbacks. It is for example an object of the present disclosure to provide a method providing an input for a STATCOM to dampen a wider range of sub-synchronous resonance, SSR, frequencies. Further objects of the present disclosure are to provide a controller which implements the method and a system comprising said controller.

According to a first aspect of the present disclosure, a method for sub-synchronous damping control (SSDC) for a STATCOM connected to an alternating current (AC) power grid is provided. The method comprises measuring a voltage representative of the voltage of the AC power grid and subjecting the voltage to a low-pass filter and a high-pass filter. The method further comprises cross-coupling an active power order of the voltage with a reactive power decoupler of the voltage to receive a voltage phase angle parameter and cross-coupling a reactive power order of the voltage with an active power decoupler of the voltage to receive a voltage magnitude parameter, and combining the voltage phase angle parameter and the voltage magnitude parameter to provide a voltage reference to the STATCOM.

According to a second aspect of the present disclosure a sub-synchronous damping controller for a STATCOM is provided. The controller is configured to obtain a measurement of a voltage representative of the voltage of an AC power grid to which the STATCOM is connected and to subject the measured voltage to a low-pass filter and a high-pass filter. The controller is further configured to cross-couple an active power order of the voltage with a reactive power decoupler of the voltage to receive a voltage phase angle parameter and cross-couple a reactive power order of the voltage with an active power decoupler of the voltage to receive a voltage magnitude parameter, and to combine the cross-coupled voltage phase angle parameter and the cross-coupled voltage magnitude parameter to provide a voltage reference to the STATCOM.

According to a third aspect of the present disclosure a system for sub-synchronous damping is provided. The control system comprises a sub-synchronous damping controller according to the second aspect and a STATCOM configured to receive the voltage reference from the sub-synchronous damping controller. The voltage reference is used to control the injection of reactive power and/or active power (in the AC power grid) to dampen sub-synchronous oscillations.

Traditional power grid systems were conventionally designed having synchronous machines, such as generators, for generating power. The mechanical swing of the rotor mass of the generator introduces oscillations in the power grid. In some circumstances, the different machinal mass of the generator can introduce sub-synchronous resonance, SSR, into the power grid, causing instability. The oscillations from the generators are of a narrow range of frequencies, and the conventional solution for damping the oscillations are to provide power system stabilizers with a reactive power compensator. The power system stabilizer dampens the oscillations by modulating the reactive power. However, the power system stabilizers require a narrow control bandwidth, selecting a specific frequency to achieve a reasonable damping of the target frequency and not significantly enhancing adjacent frequencies.

With the introduction of an increased amount of renewable energy sources into the power grid, the strength of the power grid usually decreases. It is for example known that intermittent energy sources connected to the power grid through long transmission lines or cable systems result in a weaker power grid. Weak grid conditions and high power levels, i.e., from the renewable energy sources, cause oscillations in the grid similar to the oscillations from synchronous machines. However, as realised by the inventors, the range of these frequencies are larger than the frequency range of the oscillations from the synchronous machines and the conventional power system stabilizers are only able to handle frequencies in a narrow range.

With the proposed method and controller, the STATCOM provides damping of the oscillations in a wider range of frequencies. The method results in a voltage reference that is used to control the injection of reactive power and/or active power into the power grid from the STATCOM, thereby reinforcing the strength of the power grid by reducing the voltage magnitude variations and by reducing the voltage phase angle variations. More specifically, the injection of reactive power reduces the voltage magnitude variations and injection of active power reduces the voltage phase angle variations. In a system where reactive power injection is required, the STATCOM may use power electronics to act as either a source or sink of reactive power to the power grid. Further, the STACTOM may also absorb reactive power from the power grid. In a system where active power injection is required, the STATCOM is equipped with an energy storage for active power. Further, the STATCOM may also be able to absorb active power from the power grid. A combination of these may also be used, such that for example both reactive power and active power are absorbed, or such that for example reactive power is injected and active power is absorbed.

Further, the method is more robust than conventional power system stabilizers for SSDC as the method has a wider range of frequencies in which it can operate. Conventional methods require careful tuning for a specific frequency oscillation and by admitting a wider range of frequencies in the method disclosed herein, the method is less sensitive to changes in the power grid that might affect the frequency of the oscillation. In conventional methods, the SSDC are designed especially for machines dominated system, to damp the mechanical swing, and interarea oscillations, in narrow bandwidth to avoid interactions with machine dynamic which have low damping. STATCOM do not have mechanical swing (torque control) and low damping problems and have a well damped power control. By changing the structure of controller and keeping the system dynamics, and not interacting with main controllers (power control, or torsional interaction) as well, can allow a wide range of frequency for SSDC.

By measuring the voltage representative of the voltage of the AC power grid and subjecting the voltage to the low-pass filter and the high-pass filter, oscillations in a determined range can be sorted out from the voltage. This range can be determined to correspond to the wider range of sub-synchronous oscillations caused by the introduction of renewable energy sources discussed above. The low pass filter may have a cut off frequency between 20 Hz and 50 Hz. The high pass filter may have a cut off frequency between 0.01 Hz and 5 Hz. Frequencies that are less than 0.01 Hz generally relate to frequency control and frequencies above 50 Hz generally relate to direct current, DC, components, and harmonics. The low pass filter and the high pass filter may together provide a bandpass interval of 0.01 Hz to 50 Hz. As further examples, the low pass filter and the high pass filter may together provide a bandpass interval of 5 Hz to 50 Hz or 5 Hz to 40 Hz.

Cross-coupling of the active and reactive power is performed due to the phenomenon in which changes in active power affect reactive power and vice versa due to inherent interactions between the two power components in power grids. Due to this phenomenon the cross-coupling is used to provide more efficient operation, improved voltage stability, and/or a more effective integration of renewable energy sources in modern power systems.

In the sub-synchronous frequency range and below, the grid voltage may be disturbed by for example the phase angle deviating from a nominal value in all three phases or by the voltage magnitude deviating from a nominal value in all three phases. The origin of the disturbances can be multiple, for example a device causing active power oscillations and resulting in deviations in the grid voltage phase angle (direct impact) and/or in the grid voltage magnitude (indirect impact due to transmission system). Reactive power device (SVC, capacitor bank, etc) can cause reactive power oscillation resulting in grid voltage magnitude variations. Compensation of the disturbances (by minimizing the phase angle deviation and magnitude deviation) can be done by injecting reactive power to the power grid. The reactive power order determines the (level of) reactive power that the converter of the STATCOM shall generate affecting primarily the grid voltage magnitude and indirectly the grid phase angle. By injecting active power to the power grid, the active power order determines the active power that the converter of the STATCOM shall generate affecting primarily the grid phase angle. Based on measured grid phase angle and magnitude, reactive power and active power orders are generated for "optimal damping", i.e., minimize the voltage deviation and minimize the phase angle deviation.

The cross-coupling is achieved by combining the active power order with the reactive power decoupler, or combining the reactive power order with the active power decoupler. The active power decoupler and reactive power decoupler are designed for each system to achieve the desired interaction from the STATCOM with the power grid. This will result in a flexibility to parametrize the SSDC for optimal sub-synchronous oscillation damping. The cross-coupling step is used to allow the active power order and the reactive power order to incorporate the inherent interactions between the two power components in power grids, thereby considering the effect from the reactive/active power (on each other).

The reactive power decoupler and the active power decoupler may also be seen as a reactive power suppressor and an active power suppressor, or as a reactive power compensator and an active power compensator. Which term that is used may differ depending on context, however the purpose is to cross-couple the reactive power with the active power and the active power with the reactive power.

The reactive power decoupler may be the reactive power order multiplied with a reactive cross-coupling gain. The active power decoupler may be the active power order multiplied with an active cross-coupling gain. The respective gain may be designed based on how much the cross-coupling is desired to affect the other parameter, i.e., how much the reactive power decoupler is allowed to affect the active power order. The active power decoupler and the reactive power decoupler are used to control how much of the inherent interactions between the two power components are allowed to affect the active power order and the reactive power order.

The voltage reference defines the operating point of the STATCOM. During normal operation when no sub-synchronous oscillations are detected the voltage reference may be decided by an automatic voltage control. When sub-synchronous oscillations are detected, the sub-synchronous damping control, through the method provided in the present disclosure, may control, or affect the voltage reference.

The method may further comprise converting the measured voltage into a voltage magnitude phasor and a voltage phase angle phasor. Each of the voltage magnitude phasor and the voltage phase angle phasor may be subjected to a respective low- and high-pass filter. In other words, the voltage magnitude phasor is subjected to a first low-pass filter and a first high-pass filter, and the voltage phase angle phasor is subjected to a second low-pass filter and a second high-pass filter.

To further enhance the efficiency of the method, the voltage may be converted into the voltage magnitude phasor and the voltage phase angle phasor. By converting the voltage into phasors, the low- and high-pass filters can be adapted to the respective phasors.

The active power order and the active power decoupler may originate from the voltage magnitude phasor, and the reactive power order and the reactive power decoupler may originate from the voltage phase angle phasor.

The method may further comprise subjecting each of the voltage magnitude phasor and the voltage phase angle phasor to a respective gain. The gains may provide a means to adjust and fine-tune the behaviour of the method and controller to achieve desired performance objectives such as stability, responsiveness, accuracy, and robustness.

The STATCOM may comprise a converter and an energy storage, wherein the controller is used to control the converter. The energy storage may be able to store active power and thereby the STATCOM may also be able to inject active power into the power grid. A STATCOM may use power electronics to act as either a source or sink of reactive power to the power grid.

Effects and features of the second aspect and the third aspect may be largely analogous to those described above in connection with the first aspect. Embodiments mentioned in relation to the first aspect may be at least largely compatible with the second aspect and the third aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular component parts of the method and system described herein. It is also to be understood that the terminology used herein is for the purpose of describing particular embodiments only, and it is not intended to be limiting.

### Brief Description of the Drawings

The above and other aspects of the present disclosure will now be described in more detail, with reference to the appended figures, wherein:
- Fig. 1: schematically shows a system comprising a STATCOM.
- Fig. 2: schematically shows the method according to a first embodiment.
- Fig. 3: schematically shows the method according to a second embodiment.

### Detailed description

The present disclosure is described in the following by way of a number of illustrative examples. It will be appreciated that these examples are provided for illustration and explanation only and are not intended to be limiting on the scope of the disclosure.

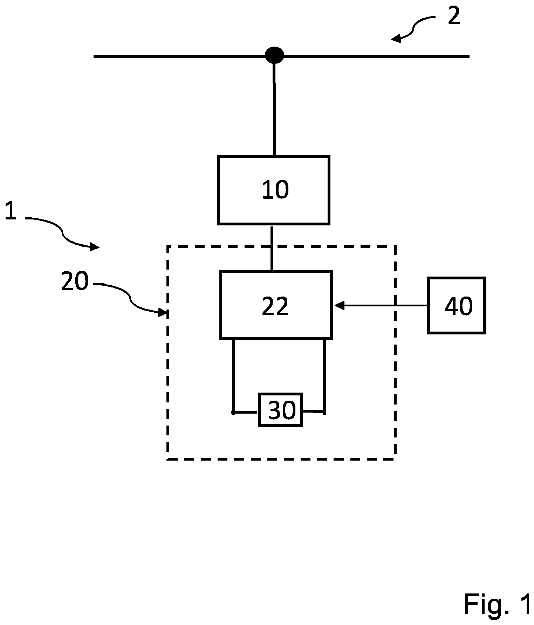

Fig. 1 illustrates a system 1 comprising a Static Synchronous Compensator, STATCOM, 20 and a sub-synchronous damping controller 40, further referred to as the controller 40. The STATCOM 20 comprises a converter 22 and an energy storage 30. The STATCOM 20 is connected to a power line of a power grid 2. The connection to the power grid may be through a transformer 10.

The STATCOM 20 is a power electronic device used in electrical power systems to provide precise voltage control and reactive power compensation through power electronics. In the present disclosure, the STATCOM may further provide active power compensation by adding an energy storage for active power. The converter 40 is capable of generating or absorbing reactive power to regulate the voltage of the AC grid (or connected electrical network). The STATCOM 20 operates by injecting or absorbing reactive/active power in response to changes in system conditions, such as variations in load or disturbances, such as sub-synchronous resonance, SSR, thereby helping in maintaining, for example, the voltage levels within acceptable limits. The controller 40 is used to control when and how the STATCOM 20 should inject active and reactive power. The injection of reactive power may reduce the voltage magnitude variations and injection of active power may reduce the voltage phase angle variations. The controller 40 provides a voltage reference to the STATCOM 20 which is used to control injection of active power and reactive power to dampen the sub-synchronous oscillations.

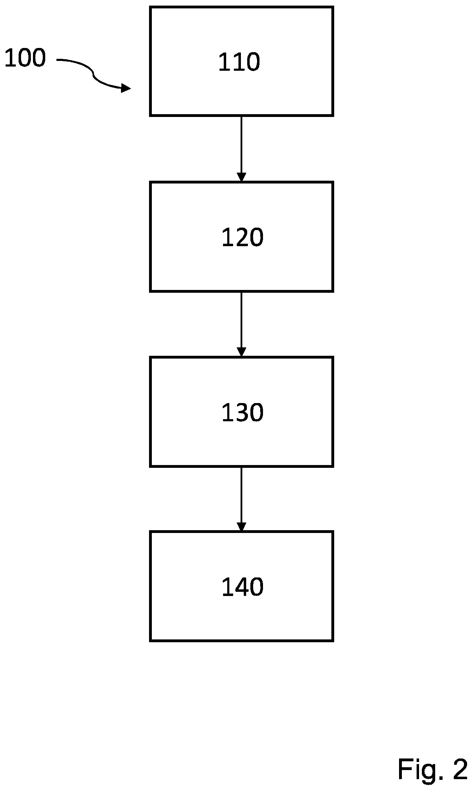

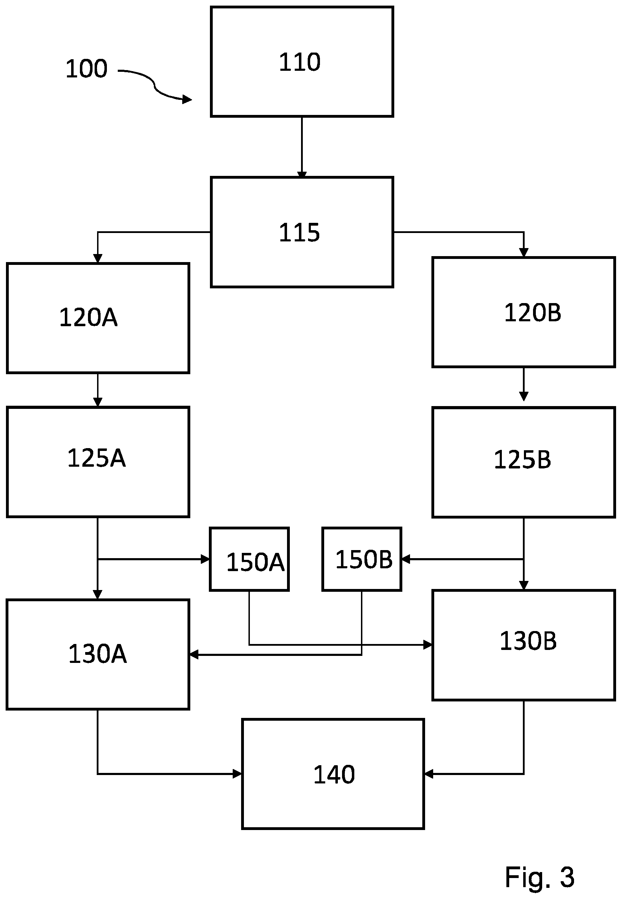

To obtain the voltage reference the controller 40 performs the method 100, which will be further discussed in connection to Fig. 2 and 3.

In Fig. 2 a method 100 for sub-synchronous damping control, SSDC, for a STATCOM 20 connected to an alternating current, AC, power grid 2 is illustrated. The method 100 comprises measuring 110 a voltage representative of the voltage of the AC power grid 2. The measuring step 110 may be achieved through for example potential transformers, voltage transformers, or voltage sensors.

The method 100 further comprises subjecting 120 the measured voltage to a low-pass filter and a high-pass filter. By subjecting 120 the voltage to the low-pass filter and the high-pass filter, oscillations in a determined range of frequencies can be sorted out from the voltage. In a low-pass filter, the cut-off frequency serves to provide an upper limit for which signals that are permitted to pass with minimal attenuation, effectively allowing frequencies below it to transmit while suppressing those higher in frequency. In a high-pass filter, the cut-off frequency serves to provide a lower limit which signals are permitted to pass with minimal attenuation, effectively allowing frequencies above it to transmit while suppressing those lower in frequency. In other words, the low-pass filter provides the upper limit, and the high-pass filter provides the lower limit, thereby specifying a range.

The method 100 allows a wider range of frequencies to pass through the low-pass filter and the high-pass filter compared to the conventional power system stabilizers. The introduction of renewable energy sources such as wind power plants that often are located far away from where the produced electricity is consumed, results in long power transmission lines in the power grid. The renewable energy sources weaken the power grid. Weak power grid conditions and high power levels, i.e., from the renewable energy sources, cause oscillations in the grid similar to the oscillations from synchronous machines, such as hydro power. However, the oscillations in a weaker power grid with high integration of intermittent energy often result in a wider range of sub-synchronous frequencies. Therefore, the low pass filter may have a cut off frequency between 20 Hz and 50 Hz and the high pass filter may have a cut off frequency between 0.01 Hz and 5 Hz. Frequencies that are less than 0.01 Hz generally relates to frequency control and frequencies above 50 Hz generally relates to direct current, DC, components, and harmonics. The low pass filter and the high pass filter may together provide a bandpass interval of 0.01 Hz to 50 Hz. As further examples, the low pass filter and the high pass filter may together provide a bandpass interval of 5 Hz to 50 Hz or 5 Hz to 40 Hz.

The method 100 further comprises cross-coupling 130 an active power order of the voltage with a reactive power decoupler of the voltage to receive a voltage phase angle parameter and cross-coupling 130 a reactive power order of the voltage with an active power decoupler of the voltage to receive a voltage magnitude parameter.

Cross-coupling generally refers to the interaction or interdependence between two or more variables or systems in a manner where changes in one variable affect the behaviour of another variable, and vice versa. Cross-coupling 130 of the active and reactive power is performed due to the phenomenon where changes in active power affect reactive power and vice versa due to inherent interactions between these two power components in power grids.

Cross-coupling 130 in the method 100 is achieved by combining the active power order with the reactive power decoupler, and by combining the reactive power order with the active power decoupler. The active power decoupler and reactive power decoupler are designed for each system to achieve the desired interaction from the STATCOM 20 with the power grid 2. This will result in a flexibility to parametrize the SSDC for optimal sub-synchronous oscillation damping. The cross-coupling step 130 is used to allow the active power order and the reactive power order to incorporate the inherent interactions between the two power components in power grids.

The active power order together with the reactive power decoupler results in the voltage phase angle parameter, and the reactive power order together with the active power decoupler results in the voltage magnitude parameter. Combining 140 the voltage phase angle parameter and the voltage magnitude parameter provides a voltage reference to the converter 22 of the STATCOM 20. The voltage reference defines the operating point of the STATCOM 20.

The controller 40 for the STATCOM 20 is configured to perform the method described above. Namely, the controller 40 is configured to obtain a measurement of a voltage representative of the voltage of the AC power grid and to subject the measured voltage to a low-pass filter and a high-pass filter. The controller 40 is further configured to cross-couple an active power order of the voltage with a reactive power decoupler of the voltage to receive a voltage phase angle parameter and cross-couple a reactive power order of the voltage with an active power decoupler of the voltage to receive a voltage magnitude parameter, and to combine the cross-coupled voltage phase angle parameter and the cross-coupled voltage magnitude parameter to provide a voltage reference to the STATCOM 20.

In Fig. 3 an alternative embodiment of the method 100 is schematically illustrated. In Fig. 3 some further steps are provided to the method of Fig. 2. As described in connection to Fig. 2 the method 100 comprises measuring 110 a voltage representative of the voltage of the AC power grid 2. The method 100 further comprises converting 115 the voltage into a voltage magnitude phasor and a voltage phase angle phasor. Each of the voltage magnitude phasor and the voltage phase angle phasor may be subjected 120A, 120B to a respective low- and high-pass filter.

The method 100 further comprises subjecting 125A, 125B each of the voltage magnitude phasor and the voltage phase angle phasor to a respective gain. The gains may provide a means to adjust and fine-tune the behaviour of the method and controller to achieve desired performance objectives such as stability, responsiveness, accuracy, and robustness.

The active power order and the active power decoupler originate from the voltage magnitude phasor, and the reactive power order and the reactive power decoupler originate from the voltage phase angle phasor.

The reactive power decoupler may be the reactive power order multiplied 150A with a reactive cross-coupling gain. The active power decoupler may be the active power order multiplied 150B with an active cross-coupling gain. The respective gain may be designed based on how much the cross-coupling is desired to affect the other parameter, i.e., how much the reactive power decoupler is allowed to affect the active power order. The active power decoupler and the reactive power decoupler are used to control how much of the inherent interactions between the two power components are allowed to affect the active power order and the reactive power order.

The method 100 further comprises combining 140 the voltage phase angle parameter and the voltage magnitude parameter for providing a voltage reference to the converter 22 of the STATCOM 20.

While the present disclosure is susceptible to various modifications and alternative forms, specific examples are shown and described in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims, including the possible combination of various elements of these specific examples.

## Claims

1. A method (100) for sub-synchronous damping control, SSDC, for a STATCOM (20) connected to an alternating current, AC, power grid (2), the method comprising;
measuring (110) a voltage representative of the voltage of the AC power grid,
subjecting (120) the voltage to a low-pass filter and a high-pass filter,
cross-coupling (130) an active power order of the voltage with a reactive power decoupler of the voltage to receive a voltage phase angle parameter and cross-coupling a reactive power order of the voltage with an active power decoupler of the voltage to receive a voltage magnitude parameter, and
combining (140) the voltage phase angle parameter and the voltage magnitude parameter to provide a voltage reference to the STATCOM.

2. The method according to claim 1 further comprising
converting (115) the measured voltage into a voltage magnitude phasor and a voltage phase angle phasor,
wherein each of the voltage magnitude phasor and the voltage phase angle phasor is subjected to a respective low- and high-pass filter.

3. The method according to claim 2, wherein the active power order and the active power decoupler originate from the voltage magnitude phasor, and the reactive power order and the reactive power decoupler originate from the voltage phase angle phasor.

4. The method according to claim 2 or 3 further comprising subjecting (150A, 150B) each of the voltage magnitude phasor and the voltage phase angle phasor to a respective gain.

5. The method according to any of the preceding claims, wherein the low pass filter has a cut off frequency between 20 Hz and 50 Hz.

6. The method according to any of the preceding claims, wherein the high pass filter has a cut off frequency between 0.01 Hz and 5 Hz.

7. The method according to any one of the preceding claims, wherein the low pass filter and the high pass filter together provide a bandpass interval of 00.1 Hz to 50 Hz.

8. A sub-synchronous damping controller (40) for a STATCOM (20), wherein the controller is configured to:
obtain a measurement of a voltage representative of the voltage of an AC power grid to which the STATCOM is connected,
subject the measured voltage to a low-pass filter and a high-pass filter,
cross-couple an active power order of the voltage with a reactive power decoupler of the voltage to receive a voltage phase angle parameter and cross-couple a reactive power order of the voltage with an active power decoupler of the voltage to receive a voltage magnitude parameter, and
combine the cross-coupled voltage phase angle parameter and the cross-coupled voltage magnitude parameter to provide a voltage reference to the STATCOM.

9. The controller of claim 8, further configured to:
convert the voltage into a voltage magnitude phasor and a voltage phase angle phasor, wherein each of the voltage magnitude phasor and the voltage phase angle phasor is subjected to a respective low- and high-pass filter.

10. The controller of claim 9, wherein the active power order and the active power decoupler originate from the voltage magnitude phasor, and the reactive power order and the reactive power decoupler originate from the voltage phase angle phasor.

11. The controller of claim 9 or 10, further configured to subject each of the voltage magnitude phasor and the voltage phase angle phasor to a respective gain.

12. The controller of any one of claims 8-11, wherein the low pass filter has a cut off frequency between 20 Hz and 50 Hz.

13. The controller of any one of claims 8-12, wherein the high pass filter has a cut off frequency between 0.01 Hz and 5 Hz.

14. The controller of any one of claims 8-13, wherein the low pass filter and the high pass filter together provide a bandpass interval of 0.01 Hz to 50 Hz.

15. A system (1) for sub-synchronous damping, the control system comprising:
a sub-synchronous damping controller (40) according to any one of claims 8-14,
a STATCOM (20) configured to receive the voltage reference from the sub-synchronous damping controller,
wherein the voltage reference is used to control the injection of reactive power and/or active power to dampen sub-synchronous oscillations.
